# FASCICULE DE BREVET EUROPEEN

(11) **EP 4 285 004 B1**
(45) Date de publication et mention de la délivrance du brevet: **19.11.2025**
(21) Numéro de dépôt: 22705435.0
(22) Date de dépôt: 24.01.2022
(51) Int. Cl.: F01D 9/04, F04D 29/54

(54) **REDRESSEUR POUR UNE TURBOMACHINE D'AÉRONEF, UNE TURBOMACHINE D'AÉRONEF EQUIPÉE D'UN TEL REDRESSEUR**
STATORRING FÜR EIN FLUGZEUGTURBINENTRIEBWERK UND DAMIT AUSGESTATTETES FLUGZEUGTURBINENTRIEBWERK
STATOR RING FOR AN AIRCRAFT TURBINE ENGINE AND AIRCRAFT TURBINE ENGINE FITTED WITH SAME

(30) Priorité: 27.01.2021 FR 2100764
(43) Date de publication de la demande: 06.12.2023
(73) Titulaire: SAFRAN AIRCRAFT ENGINES, 75015 Paris (FR)
(72) Inventeur: MERLIN, Rémi, 77550 MOISSY-CRAMAYEL (FR); GUILMET, Damien Gérard Marcel Jacques, 77550 MOISSY-CRAMAYEL (FR); GOUSPY, Romain Mikel Erwan, 77550 MOISSY-CRAMAYEL (FR)
(74) Mandataire: Gevers & Orès
(86) Numéro de dépôt international: PCT/FR2022/050126
(87) Numéro de publication internationale: WO 2022/162299

(56) Documents cités:
- WO-A1-2011/157956
- FR-A1- 2 948 737
- FR-A1- 3 085 416

## Description

### Domaine technique de l'invention

L'invention concerne un redresseur pour une turbomachine d'aéronef, une turbomachine d'aéronef équipée d'un tel redresseur.

### Arrière-plan technique

L'arrière-plan technique comprend les documents FR-A1-2 948 737, FR-A1-3 085 416 et WO-A1-2011/157956.

Une turbomachine pour aéronef comprend un compresseur afin de comprimer de l'air, notamment pour donner à l'air une vitesse, une pression, et une température adaptée pour bruler l'air dans une chambre de combustion avec du carburant.

Un compresseur comprend en général plusieurs étages, chaque étage comprend un premier organe aubagé tournant qui forme un rotor, et un deuxième organe aubagé fixe, appelé redresseur, qui forme un stator, et qui est situé en aval du rotor dans le sens d'écoulement de l'air dans la turbomachine.

Chaque étage du compresseur comprend ainsi un redresseur sectorisé, c'est-à-dire un redresseur comportant plusieurs secteurs de redresseur disposés circonférentiellement bout à bout autour d'un axe longitudinal de la turbomachine. Chaque secteur comporte une pluralité d'aubes fixes.

Un redresseur comprend une virole externe et une virole interne espacées l'une de l'autre, et des aubes qui relient la virole externe et la virole interne. L'espace entre la virole externe et la virole interne forme un canal d'écoulement pour le flux d'air circulant dans le compresseur.

Les redresseurs sectorisés sont des pièces complexes évoluant dans un environnement où ils sont de plus en plus sollicités (pressions, températures et régime rotor élevés) qui génère un nombre de modes et des niveaux vibratoires élevés. Les géométries des redresseurs sont toutes très semblables en termes de comportement mécanique. Suite à une forte excitation vibratoire, l'énergie se propage efficacement à travers l'ensemble du secteur par l'intermédiaire des viroles interne et externe très rigides.

Les réponses vibratoires prédites par les critères de conception ou vues en essai après dépouillement, montrent que les redresseurs possèdent des niveaux vibratoires très importants. Ainsi, lors du fonctionnement de la turbomachine, les vibrations créées par le fonctionnement de ladite turbomachine peuvent entrainer la création de charges mécaniques importantes au niveau des viroles interne et externe ainsi que des aubes. Ces charges importantes peuvent être responsables de l'apparition de criques. La présente invention a notamment pour but de résoudre tout ou partie des problèmes précités.

### Résumé de l'invention

L'invention propose à cet effet un redresseur pour une turbomachine d'aéronef, ce redresseur comportant deux viroles annulaires coaxiales, respectivement interne et externe, reliées ensemble par des aubes qui sont chacune pleine et venue de matière avec les viroles, la virole externe comportant une surface annulaire externe reliée à au moins un crochet de fixation du redresseur, et la virole interne comportant une surface annulaire interne reliée à un support d'un revêtement abradable,
caractérisé en ce qu'au moins une desdites surfaces interne et externe comporte des séries d'évidements qui sont situés au droit des aubes et qui sont configurés de façon à ce que les aubes soient reliées à la virole correspondante, au niveau des évidements, par des voiles de matière qui ont une épaisseur inférieure à celle de cette virole, et en ce que ledit au moins un crochet de fixation est disposé entre deux séries d'évidements de la surface externe de la virole externe, et/ou ledit support est disposé entre deux séries d'évidements de la surface interne de la virole interne.

L'invention consiste ainsi en particulier à modifier une ou plusieurs parties des viroles par l'intermédiaire d'évidements situés aux extrémités des aubes. En utilisant une ou plusieurs zones d'évidement on assouplit localement les viroles. Les avantages sont pluriels et en particulier :
- abaissement des contraintes statiques ;
- atténuation de la propagation vibratoire au sein du redresseur ; et
- réduction de la masse du redresseur.

Les évidements situés aux extrémités des aubes au niveau des viroles interne et externe permettent ainsi d'amortir les réponses vibratoires et statiques par assouplissement local des viroles interne et externe.

En outre, lors de la conception d'une turbomachine, trois acteurs principaux sont concernés : les mécaniciens, les aérodynamiciens et l'intégration. Une fois les différentes phases d'itérations terminées entre ces trois acteurs, il n'est plus possible de modifier les propriétés du redresseur comme le dessin des aubes (partie aérodynamique) ou l'interface entre les différentes pièces (partie intégration).

Or, la forme de la virole interne est une préoccupation purement mécanique et sa modification, en particulier pour créer des évidements selon l'invention, n'affecte donc pas le design retenu. L'invention permet ainsi de pouvoir influencer la tenue vibratoire post itération entre les trois acteurs, sans modifier le design du canal d'écoulement pour le flux d'air circulant dans le compresseur ou aux interfaces.

L'invention permet ainsi de diminuer les réponses vibratoires et statiques sur les redresseurs sans impacter les spécifications apportées par les autres acteurs (dessins des aérodynamiciens, interface définit par l'intégration).

Dans la présente demande, on entend par série d'évidements, une pluralité d'évidements qui peuvent se présenter sous la forme d'une rangée annulaire d'évidements régulièrement répartis autour d'un axe principal du redresseur. On entend par au moins deux séries d'évidements, le fait d'avoir au moins deux ensembles d'évidements, et par exemple deux rangées annulaires d'évidements régulièrement répartis autour de l'axe du redresseur. Le redresseur, selon l'invention, peut comprendre une ou plusieurs des caractéristiques ci-dessous, prises isolément les unes avec les autres ou en combinaison les unes avec les autres :
- ladite surface interne comprend une série d'évidements situés au droit des bords d'attaque des aubes et/ou une série d'évidements situés au droit des bords de fuite des aubes ;
- ladite surface externe comprend une série d'évidements situés au droit des bords d'attaque des aubes et/ou une série d'évidements situés au droit des bords de fuite des aubes ;
- les aubes sont reliées à la virole interne équipée d'évidements par des voiles de matière qui ont une épaisseur Evoile-int inférieure ou égale à Evirole-int/3, et de préférence inférieure ou égale à Evirole-int/4, Evirole-int étant l'épaisseur de la virole interne dans la zone comportant les évidements ;
- les aubes sont reliées à la virole externe équipée d'évidements par des voiles de matière qui ont une épaisseur Evoile-ext inférieure ou égale à Evirole-ext/2, et de préférence inférieure ou égale à Evirole-ext/2,5, Evirole-ext étant l'épaisseur de la virole externe dans la zone comportant les évidements ;
- chacun des évidements a une forme générale allongée le long d'une ligne de cambrure de l'aube correspondante, chacun des évidements ayant en section transversale et/ou en section longitudinale une forme générale trapézoïdale ou triangulaire ;
- chacune des aubes est reliée à la ou à chaque virole équipée d'évidements par deux voiles de matière latéraux qui s'étendent respectivement du côté de l'intrados et de l'extrados de l'aube et qui sont symétriques par rapport à un plan médian passant au milieu de l'évidement et par un axe d'allongement de l'aube ;
- les deux voiles de matière s'étendent depuis un premier plan passant par la virole correspondante jusqu'à un second plan passant par une extrémité de l'aube correspondante, les premier et second plans étant parallèles et à distance l'un de l'autre.

La présente invention concerne également une turbomachine d'aéronef, comportant au moins un redresseur tel que décrit précédemment.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] La figure 1 est une représentation schématique en demi coupe d'un compresseur haute pression d'une turbomachine ;
[Fig.2] La figure 2 est une représentation schématique en perspective d'un secteur d'un redresseur du compresseur haute pression selon l'invention ; [Fig.3] La figure 3 est une représentation schématique en coupe longitudinale du secteur de la figure 2 ;
[Fig.4] La figure 4 est une représentation schématique en coupe et en perspective d'une aube ainsi que de viroles interne et externe selon l'invention, selon une coupe transversale effectuée environ à 80% de la corde de l'aube illustrée à la figure 3 ;
[Fig.5] La figure 5 est une représentation schématique en coupe et en perspective d'une extrémité externe de l'aube et de la virole externe selon l'invention, selon une coupe transversale effectuée environ à 80% de la corde de l'aube illustrée à la figure 3 ; et
[Fig.6] La figure 6 est une représentation schématique en coupe et en perspective d'une extrémité interne de l'aube et de la virole interne selon l'invention, selon une coupe transversale effectuée environ à 80% de la corde de l'aube illustrée à la figure 3.

### Description détaillée de l'invention

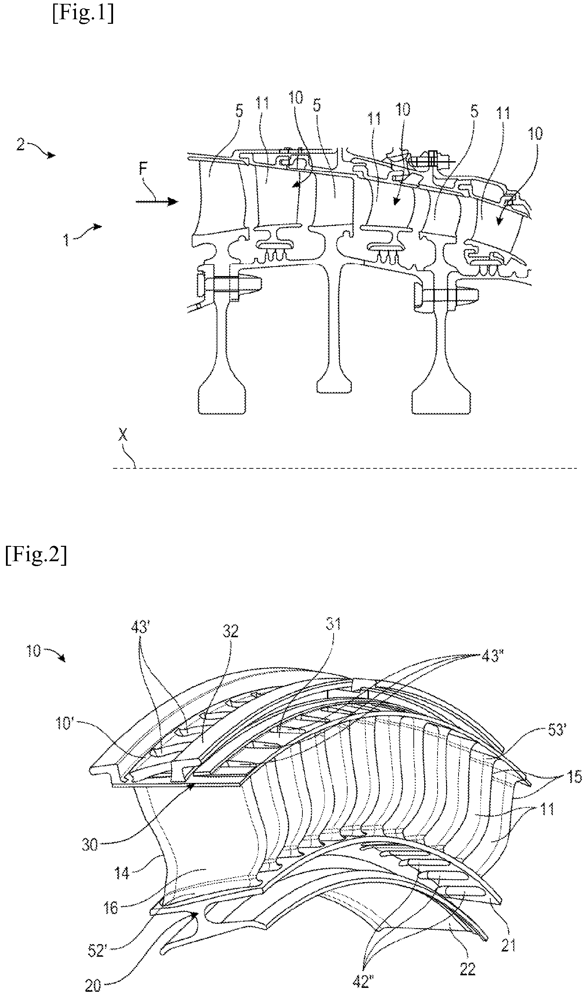

La figure 1 représente un compresseur 1 haute pression d'une turbomachine 2 pour un aéronef, comprenant plusieurs étages. Le compresseur 1 comprend plusieurs rangées annulaires d'aubes fixes 11 à profil aérodynamique et des rangées d'aubes rotatives 5. Les aubes 11, 5 s'étendent radialement à travers le compresseur 1 où circule un flux primaire F. Chaque étage du compresseur comprend un redresseur (représenté 10 sur la figure 2) sectorisé, c'est-à-dire un redresseur 10 comportant plusieurs secteurs 10' de redresseur disposés circonférentiellement bout à bout autour d'un axe longitudinal X de la turbomachine de manière à former le redresseur 10. Chaque secteur 10' comporte une pluralité des aubes 11 fixes. Les redresseurs 10 sont configurés pour diriger le flux primaire F vers les aubes rotatives 5. Le terme « radial » est défini par rapport à un axe sensiblement perpendiculaire à l'axe longitudinal X de la turbomachine 2.

Comme représenté sur la figure 2, le redresseur 10 pour une turbomachine d'aéronef comporte une virole interne 20 et une virole externe 30 qui sont espacées l'une de l'autre, la virole externe 30 étant située autour de la virole interne 20. La virole interne 20 et la virole externe 30 sont toutes les deux des pièces annulaires coaxiales.

Les redresseurs 10 sectorisés sont des pièces complexes évoluant dans un environnement où ils sont de plus en plus sollicités (pressions, températures, et régime rotor élevés) qui génère un nombre de modes et des niveaux vibratoires élevés. Suite à une forte excitation vibratoire en fonctionnement, l'énergie se propage efficacement à travers l'ensemble des redresseurs 10 ou secteur par l'intermédiaire des viroles interne 20 et externe 30.

De manière classique les termes « interne » et « externe » sont compris au regard de l'axe X de la turbomachine, et les termes « amont » et « aval » sont compris suivant le sens d'écoulement des gaz dans la turbomachine.

Les viroles interne 20 et externe 30 sont reliées ensemble par les aubes fixes 11. Les aubes 11 sont chacune pleine et par exemple venue de matière avec les viroles 20, 30.

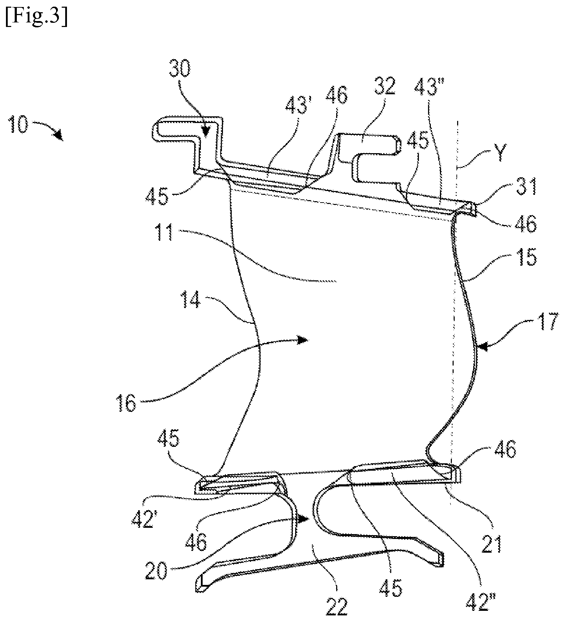

Comme représenté sur les figures 2, 3, la virole externe 30 comporte une surface annulaire externe 31 reliée à au moins un crochet 32 de fixation du redresseur 10.

La virole interne 20 comporte une surface annulaire interne 21 reliée à un support 22 d'un revêtement abradable. La virole interne 20 présente notamment une forme en I selon une coupe longitudinale.

Au moins une desdites surfaces interne 21 et externe 31, et ici les deux, comportent des évidements 42', 42", 43', 43" qui sont situés au droit des aubes 11. Selon les caractéristiques géométriques et la tenue mécanique souhaitée du redresseur, le nombre d'évidement et leur géométrie peut être variable.

La surface interne 21 comprend en particulier une série d'évidements 42' situés au droit des bords d'attaque 14 des aubes 11. La surface interne 21 comprend par exemple une série d'évidements 42" situés au droit des bords de fuite 15 des aubes 11.

La surface externe 31 comprend en particulier une série d'évidements 43' situés au droit des bords d'attaque 14 des aubes 11. La surface externe 31 comprend par exemple une série d'évidements 43" situés au droit des bords de fuite 15 des aubes 11.

Chacun des évidements 42', 42" de la surface interne 21 et chacun des évidements 43', 43" de la surface externe 31 a notamment une forme générale allongée le long d'une ligne de cambrure ou de squelette C2, C3, respectivement ligne de cambrure C2 au niveau de la surface interne 21 et ligne de cambrure C3 au niveau de la surface externe 31 de l'aube 11 correspondante. La géométrie de l'aube 11 peut varier selon la hauteur (i.e. radialement), les évidements 42', 42", 43', 43" suivent donc la ligne de cambrure de la section au sommet de l'aube 11 pour la virole externe 30 et au pied de l'aube 11 pour la virole interne 20.

Chacun des évidements 42', 42", 43', 43" a par exemple en section transversale et/ou en section longitudinale par rapport à l'axe X une forme générale trapézoïdale ou triangulaire.

Les évidements 42', 42", 43', 43" ont notamment une forme de cuvette et comprennent en particulier des bords amont 45 et aval 46 orientés sensiblement parallèlement à l'axe Y ou inclinés par rapport à cet axe.

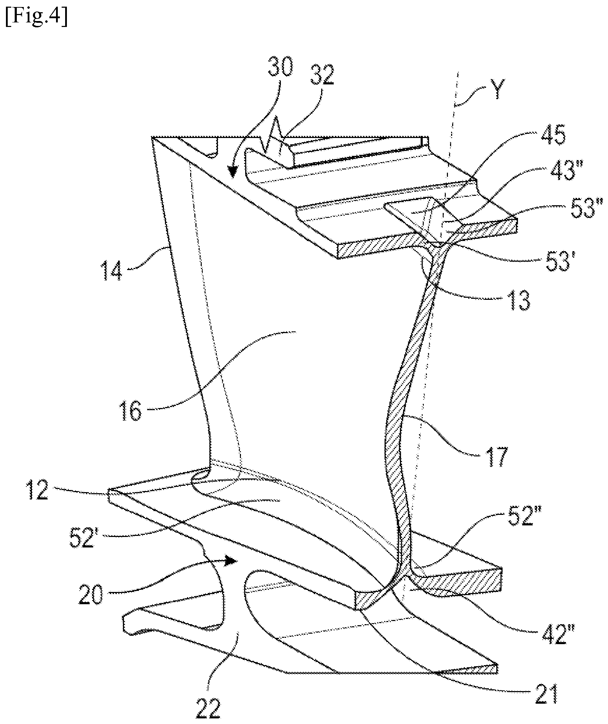

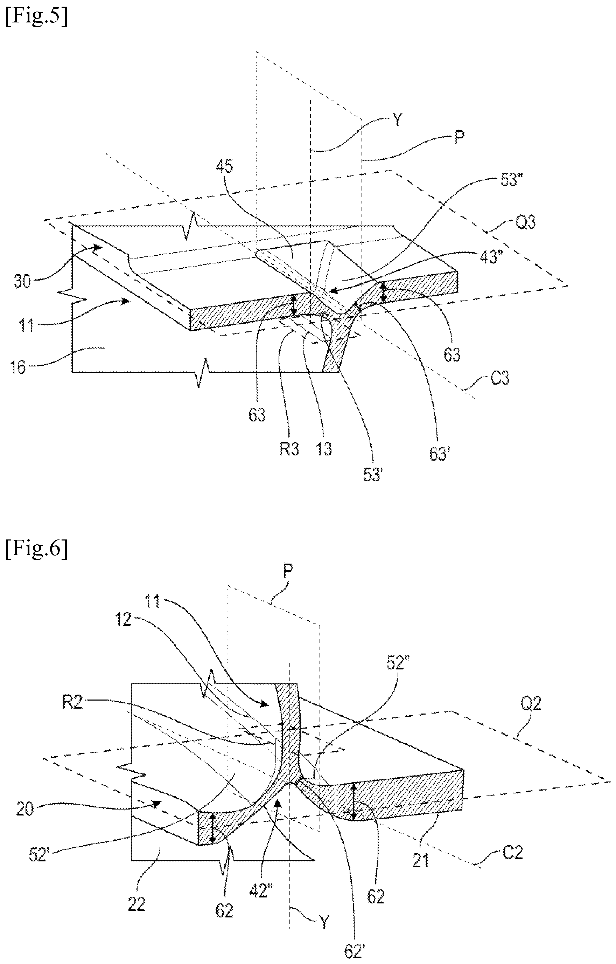

Les figures 4, 5 et 6 sont des vues en coupe de l'aube 11 et/ou des viroles 20, 30, avec un plan de coupe qui est perpendiculaire aux viroles 20, 30 et au bord de fuite 15 de l'aube 11 et passant notamment au fond de la forme de cuvette définie par les évidements 42", 43" situés au droit du bord de fuite 15 de l'aube 11. Si on considère la corde de l'aube 11, c'est-à-dire la ligne droite reliant le bord d'attaque 14 au bord de fuite 15, le plan de coupe passe sensiblement à 80% de cette corde mesurée depuis le bord d'attaque 14 jusqu'au bord de fuite 15. Le plan de coupe passe donc à 20% du bord de fuite 15, notamment en amont et à proximité de l'axe Y tel que représenté sur la figure 3.

Comme représentées sur ces figures 4, 5, 6, les surfaces interne 21 et externe 31 sont configurées de façon à ce que les aubes 11 soient reliées à la virole 20, 30 correspondante, au niveau des évidements 42', 42", 43', 43", par des voiles de matière 52', 52", 53', 53". Les bords amont 45 et aval 46 et les voiles de matières 52', 52", 53', 53" de chaque évidement 42', 42", 43', 43" forment entre eux la forme de cuvette mentionnée précédemment.

Chacune des aubes 11 est reliée à la virole interne 20 équipée d'évidements 42', 42" par deux voiles de matière 52', 52" latéraux qui s'étendent respectivement du côté d'un intrados 16 et d'un extrados 17 de l'aube 11 et qui sont symétriques par rapport à un plan médian P passant au milieu de l'évidement 42', 42" et par un axe d'allongement Y de l'aube 11 sensiblement perpendiculaire à l'axe X.

Chacune des aubes 11 est reliée à la virole externe 30 équipée d'évidements 43', 43" par deux voiles de matière 53', 53" latéraux qui s'étendent respectivement du côté de l'intrados 16 et de l'extrados 17 de l'aube 11 et qui sont symétriques par rapport au plan médian P passant au milieu de l'évidement 43', 43" et par l'axe d'allongement Y de l'aube 11.

Les deux voiles de matière 52', 52" reliant chacune des aubes 11 à la virole interne 20 s'étendent depuis un premier plan Q2 passant par la virole interne 20 jusqu'à un second plan R2 passant par une extrémité inférieure ou interne 12 de l'aube 11 correspondante, les premier Q2 et second plans R2 étant parallèles et à distance l'un de l'autre et par exemple perpendiculaire à l'axe Y.

Les deux voiles de matière 53', 53" reliant chacune des aubes 11 à la virole externe 30 s'étendent depuis un premier plan Q3 passant par la virole externe 30 jusqu'à un second plan R3 passant par une extrémité supérieure ou externe 13 de l'aube 11 correspondante, les premier Q3 et second plans R3 étant parallèles et à distance l'un de l'autre et par exemple perpendiculaire à l'axe Y.

Les deux voiles de matière 52', 52" reliant chacune des aubes 11 à la virole interne 20 ont une épaisseur 62' inférieure à l'épaisseur 62 de cette virole interne 20. L'épaisseur 62' des voiles 52', 52", également nommée Evoile-int, présente notamment une valeur minimum de 0.5mm. La zone de la virole interne 20, comportant les évidements 42', 42", a une épaisseur 62, également nommée Evirole-int. L'épaisseur 62' des voiles 52', 52" est par exemple inférieure ou égale à 1/3 de l'épaisseur 62 de la virole interne 20, et de préférence inférieure ou égale à 1/4 de l'épaisseur 62 de la virole interne 20. Autrement dit, Evoile-int est inférieure ou égale à Evirole-int/3, et de préférence inférieure ou égale à Evirole-int/4.

Les deux voiles de matière 53', 53" reliant chacune des aubes 11 à la virole externe 30 ont une épaisseur 63' inférieure à l'épaisseur 63 de cette virole externe 30. L'épaisseur 63' des voiles 52', 52", également nommée Evoile-ext, présente notamment une valeur minimum de 0.5mm. La zone de la virole externe 30, comportant les évidements 43', 43", a une épaisseur 63, également nommée Evirole-ext. L'épaisseur 63' des voiles 53', 53" est par exemple inférieure ou égale à ½ de l'épaisseur 63 de la virole externe 30, et de préférence inférieure ou égale à 1/2.5 de l'épaisseur 63 de la virole externe. Autrement dit, Evoile-ext est inférieure ou égale à Evirole-ext/2, et de préférence inférieure ou égale à Evirole-ext/2,5.

Ledit au moins un crochet de fixation 32 est par exemple disposé entre deux séries d'évidements 43', 43" de la virole externe 30. Plus précisément, au moins un crochet de fixation 32 est disposé entre la série d'évidements 43' de la virole externe 30 située au niveau des bords d'attaque 14 des aubes 11 et la série d'évidements 43" de la virole externe 30 située au niveau des bords de fuite 15 des aubes 11.

Le support 22 est notamment disposé entre deux séries d'évidements 42', 42" de la virole interne 20. Plus précisément, le support 22 est disposé entre la série d'évidements 42' de la virole interne 20 située au niveau des bords d'attaque 14 des aubes 11 et la série d'évidements 42" de la virole interne 20 située au niveau des bords de fuite 15 des aubes 11.

En utilisant un ou plusieurs évidements 42', 42", 43', 43", l'invention permet d'abaisser les contraintes statiques du redresseur notamment en assouplissant localement les viroles 20, 30. Par exemple, pour une aube 11 qui présente une contrainte maximale au niveau de son bord d'attaque 14 proche de la virole externe 30, il est possible de réduire, notamment de 8%, soit 25MPa, les contraintes statiques de l'aube 11, grâce à tout ou partie des évidements 42', 42", 43', 43".

Les évidements 42', 42", 43', 43" permettent en outre d'atténuer la propagation vibratoire dans le redresseur. En effet, plus les viroles 20, 30 sont assouplies, plus la propagation vibratoire est atténuée. Ce constat est dépendant du type de mode de vibration concerné et de la localisation de sa criticité maximum. Il est notamment possible d'analyser les réponses vibratoires via le critère énergétique des réponses modales.

En fonction du besoin, l'atténuation souhaitée peut être voulu spécifique à un mode ou à une plage de mode. Pour ce faire, on peut imaginer modifier l'épaisseur des voiles ou partitionner de façon différente les zones d'évidement (aube à aube) ou encore adapter la géométrie des évidements au besoin vibratoire.

Les évidements permettent par ailleurs d'avoir un effet positif sur la masse du redresseur. En effet, les modifications post-conception par l'intermédiaire d'un enlèvement de matière contribue à un gain de masse, pouvant aller par exemple jusqu'à 4% de réduction pour un secteur 10' de redresseurs 10.

De plus, la modification des viroles 20, 30 par les évidements 42', 42", 43', 43" n'a aucun impact sur les autres acteurs de la conception.

La réalisation de ce type de géométrie, c'est-à-dire après évidements, est notamment adaptée à la fabrication additive, notamment appelée fusion laser. La présente invention concerne également une turbomachine d'aéronef 2, comportant au moins un redresseur 10 tel que décrit précédemment.

## Revendications

1. Redresseur (10) pour une turbomachine (2) d'aéronef, ce redresseur (10) comportant deux viroles (20, 30) annulaires coaxiales, respectivement interne (20) et externe (30), reliées ensemble par des aubes (11) qui sont chacune pleine et venue de matière avec les viroles (20, 30), la virole externe (30) comportant une surface annulaire externe (31) reliée à au moins un crochet (32) de fixation du redresseur (10), et la virole interne (20) comportant une surface annulaire interne (21) reliée à un support (22) d'un revêtement abradable, **caractérisé en ce qu'**au moins une desdites surfaces interne (21) et externe (31) comporte des séries d'évidements (42', 42", 43', 43") qui sont situés au droit des aubes (11) et qui sont configurés de façon à ce que les aubes (11) soient reliées à la virole (20, 30) correspondante, au niveau des évidements (42', 42", 43', 43"), par des voiles de matière (52', 52", 53', 53") qui ont une épaisseur (62', 63') inférieure à celle (62, 63) de cette virole (20, 30),
et **en ce que** ledit au moins un crochet de fixation (32) est disposé entre deux séries d'évidements (43', 43") de la surface externe (31) de la virole externe (30), et/ou ledit support (22) est disposé entre deux séries d'évidements (42', 42") de la surface interne (21) de la virole interne (20).

2. Redresseur (10) selon la revendication 1, dans lequel ladite surface interne (21) comprend une série d'évidements (42') situés au droit des bords d'attaque (14) des aubes (11) et/ou une série d'évidements (42") situés au droit des bords de fuite (15) des aubes (11).

3. Redresseur (10) selon l'une des revendications précédentes, dans lequel ladite surface externe (31) comprend une série d'évidements (43') situés au droit des bords d'attaque (14) des aubes (11) et/ou une série d'évidements (43") situés au droit des bords de fuite (15) des aubes (11).

4. Redresseur (10) selon l'une des revendications précédentes, dans lequel les aubes (11) sont reliées à la virole interne (20) équipée d'évidements (42', 42") par des voiles (52', 52") de matière qui ont une épaisseur Evoile-int (62') inférieure ou égale à Evirole-int/3, et de préférence inférieure ou égale à Evirole-int/4, Evirole-int étant l'épaisseur (62) de la virole interne (20) dans la zone comportant les évidements (42', 42").

5. Redresseur (10) selon l'une des revendications précédentes, dans lequel les aubes (11) sont reliées à la virole externe (30) équipée d'évidements (43', 43") par des voiles de matière (53', 53") qui ont une épaisseur Evoile-ext (63') inférieure ou égale à Evirole-ext/2, et de préférence inférieure ou égale à Evirole-ext/2,5, Evirole-ext étant l'épaisseur (63) de la virole externe (30) dans la zone comportant les évidements (43', 43").

6. Redresseur (10) selon l'une des revendications précédentes, dans lequel chacun des évidements (42', 42", 43', 43") a une forme générale allongée le long d'une ligne de cambrure (C2, C3) de l'aube (11) correspondante, chacun des évidements (42', 42", 43', 43") ayant en section transversale et/ou en section longitudinale une forme générale trapézoïdale ou triangulaire.

7. Redresseur (10) selon l'une des revendications précédentes, dans lequel chacune des aubes (11) est reliée à la ou à chaque virole (20, 30) équipée d'évidements (42', 42", 43', 43") par deux voiles de matière (52', 52", 53', 53") latéraux qui s'étendent respectivement du côté de l'intrados (16) et de l'extrados (17) de l'aube (11) et qui sont symétriques par rapport à un plan médian (P) passant au milieu de l'évidement (42', 42", 43', 43") et par un axe d'allongement (Y) de l'aube (11).

8. Redresseur (10) selon la revendication précédente, dans lequel les deux voiles de matière (52', 52", 53', 53") s'étendent depuis un premier plan (Q2, Q3) passant par la virole (20, 30) correspondante jusqu'à un second plan (R2, R3) passant par une extrémité (12, 13) de l'aube (11) correspondante, les premier (Q2, Q3) et second (R2, R3) plans étant parallèles et à distance l'un de l'autre.

9. Turbomachine d'aéronef (2), comportant au moins un redresseur (10) selon l'une des revendications précédentes.

## Patentansprüche

1. Statorring (10 für ein Flugzeugturbotriebwerk (2), wobei dieser Statorring (10) zwei koaxiale ringförmige Halterungen (20, 30), eine innere (20) bzw. eine äußere (30), umfasst, die über Schaufeln (11) miteinander verbunden sind, die jeweils voll und einstückig mit den Halterungen (20, 30) sind, wobei die äußere Halterung (30) eine ringförmige Außenfläche (31) umfasst, die mit mindestens einem Befestigungshaken (32) des Statorrings (10) verbunden ist, und die innere Halterung (20) eine ringförmige Innenfläche (21) umfasst, die mit einer Stütze (22) mit abreibbarer Beschichtung verbunden ist, **dadurch gekennzeichnet, dass** mindestens eine der inneren (21) und äußeren (31) Fläche eine Reihe von Aussparungen (42', 42", 43', 43") umfasst, die direkt unter den Schaufeln (11) gelegen sind und die derart konfiguriert sind, dass die Schaufeln (11) mit der entsprechenden Halterung (20, 30) auf Höhe der Aussparungen (42', 42", 43', 43") über Materialschalen (52', 52", 53', 53") verbunden sind, die eine kleinere Dicke (62', 63') als jene (62, 63) dieser Halterung (20, 30) aufweisen,
und dadurch, dass der mindestens eine Befestigungshaken (32) zwischen zwei Reihen von Aussparungen (43', 43") der Außenfläche (31) der äußeren Halterung (30) angeordnet ist, und/oder die Stütze (22) zwischen zwei Reihen von Aussparungen (42', 42") der Innenfläche (21) der inneren Halterung (20) angeordnet ist.

2. Statorring (10) nach Anspruch 1, wobei die Innenfläche (21) eine Reihe von Aussparungen (42'), die direkt unter den Angriffskanten (14) der Schaufeln (11) gelegen sind, und/oder eine Reihe von Aussparungen (42"), die direkt unter den Hinterkanten (15) der Schaufeln (11) gelegen sind, umfasst.

3. Statorring (10) nach einem der vorstehenden Ansprüche, wobei die Außenfläche (31) eine Reihe von Aussparungen (43'), die direkt unter den Angriffskanten (14) der Schaufeln (11) gelegen sind, und/oder eine Reihe von Aussparungen (43"), die direkt unter den Hinterkanten (15) der Schaufeln (11) gelegen sind, umfasst.

4. Statorring (10) nach einem der vorstehenden Ansprüche, wobei die Schaufeln (11) mit der inneren Halterung (20), die mit Aussparungen (42', 42") ausgestattet ist, über Materialschalen (52', 52") verbunden sind, die eine Dicke Evoile-int (62') aufweisen, die kleiner oder gleich Evirole-int/3 und vorzugsweise kleiner oder gleich Evirole-int/4 ist, wobei Evirole-int die Dicke (62) der inneren Halterung (20) im Bereich ist, der die Aussparungen (42', 42") umfasst.

5. Statorring (10) nach einem der vorstehenden Ansprüche, wobei die Schaufeln (11) mit der äußeren Halterung (30), die mit Aussparungen (43', 43") ausgestattet ist, über Materialschalen (53', 53") verbunden sind, die eine Dicke Evoile-ext (63') aufweisen, die kleiner oder gleich Evirole-ext/2 und vorzugsweise kleiner oder gleich Evirole-ext/2,5 ist, wobei Evirole-ext die Dicke (63) der äußeren Halterung (30) im Bereich ist, der die Aussparungen (43', 43") umfasst.

6. Statorring (10) nach einem der vorstehenden Ansprüche, wobei jede der Aussparungen (42', 42", 43', 43") eine allgemeine längliche Form entlang einer Wölbungslinie (C2, C3) der entsprechenden Schaufel (11) aufweist, wobei jede der Aussparungen (42', 42", 43', 43") im Querschnitt und/oder im Längsschnitt eine allgemeine trapezförmige oder dreieckige Form aufweist.

7. Statorring (10) nach einem der vorstehenden Ansprüche, wobei jede der Schaufeln (11) mit der oder jeder Halterung (20, 30), die mit Aussparungen (42', 42", 43', 43") ausgestattet ist, über zwei seitliche Materialschalen (52', 52", 53', 53") verbunden ist, die sich auf der Druckseite (16) bzw. der Saugseite (17) der Schaufel (11) erstrecken und die in Bezug auf eine mittlere Ebene (P), die durch die Mitte der Aussparung (42', 42", 43', 43") verläuft, und in Bezug auf eine Verlängerungsachse (Y) der Schaufel (11) symmetrisch sind.

8. Statorring (10) nach dem vorstehenden Anspruch, wobei sich die zwei Materialschalen (52', 52", 53', 53") ausgehend von einer ersten Ebene (Q2, Q3), die durch die entsprechende Halterung (20, 30) verläuft, bis zu einer zweiten Ebene (R2, R3), die durch ein Ende (12, 13) der entsprechenden Schaufel (11) verläuft, erstrecken, wobei die erste (Q2, Q3) und die zweite (R2, R3) Ebene parallel und voneinander beabstandet sind.

9. Flugzeugturbotriebwerk (2), das mindestens einen Statorring (10) nach einem der vorstehenden Ansprüche umfasst.

## Claims

1. A stator ring (10) for an aircraft turbine engine (2), said stator ring (10) comprising two coaxial annular shrouds (20, 30), an internal shroud (20) and an external shroud (30) respectively, connected together by vanes (11) which are each solid and integral with the shrouds (20, 30), the external shroud (30) comprising an external annular surface (31) connected to at least one attachment catch (32) for attaching the stator ring (10), and the internal shroud (20) comprising an internal annular surface (21) connected to a support (22) for an abradable coating, **characterised in that** at least one of said internal (21) and external (31) surfaces comprises series of recesses (42', 42", 43', 43") which are located in line with the vanes (11) and which are configured so that the vanes (11) are connected to the corresponding shroud (20, 30), at the level of the recesses (42', 42", 43', 43"), by webs of material (52', 52", 53', 53") which have a thickness (62', 63') less than that (62, 63) of said shroud (20, 30),
and **in that** said at least one attachment catch (32) is arranged between two series of recesses (43', 43") of the external surface (31) of the external shroud (30), and/or said support (22) is arranged between two series of recesses (42', 42") of the internal surface (21) of the internal shroud (20).

2. The stator ring (10) according to claim 1, wherein said internal surface (21) comprises a series of recesses (42') located in line with the leading edges (14) of the vanes (11) and/or a series of recesses (42") located in line with the trailing edges (15) of the vanes (11).

3. The stator ring (10) according to one of the preceding claims, wherein said external surface (31) comprises a series of recesses (43') located in line with the leading edges (14) of the vanes (11) and/or a series of recesses (43") located in line with the trailing edges (15) of the vanes (11).

4. The stator ring (10) according to one of the preceding claims, wherein the vanes (11) are connected to the internal shroud (20) fitted with recesses (42', 42") by webs (52', 52") of material which have a thickness Evoile-int (62') less than or equal to Evirole-int/3, and preferably less than or equal to Evirole-int/4, Evirole-int being the thickness (62) of the internal shroud (20) in the area comprising the recesses (42', 42").

5. The stator ring (10) according to one of the preceding claims, wherein the vanes (11) are connected to the external shroud (30) fitted with recesses (43', 43") by webs of material (53', 53") which have a thickness Evoile-ext (63') less than or equal to Evirole-ext/2, and preferably less than or equal to Evirole-ext/2.5, Evirole-ext being the thickness (63) of the external shroud (30) in the area comprising the recesses (43', 43").

6. The stator ring (10) according to any of the preceding claims, wherein each of the recesses (42', 42", 43', 43") has a generally elongate shape along a camber line (C2, C3) of the corresponding vane (11), each of the recesses (42', 42", 43', 43") having in cross-section and/or in longitudinal section a generally trapezoidal or triangular shape.

7. The stator ring (10) according to one of the preceding claims, wherein each of the vanes (11) is connected to the or each shroud (20, 30) fitted with recesses (42', 42", 43', 43") by two lateral webs of material (52', 52", 53', 53") which extend respectively towards the side of the intrados (16) and of the extrados (17) of the vane (11) and which are symmetrical with respect to a median plane (P) passing through the middle of the recess (42', 42", 43', 43") and through an axis of elongation (Y) of the vane (11).

8. The stator ring (10) according to the preceding claim, wherein the two webs of material (52', 52", 53', 53") extend from a first plane (Q2, Q3) passing through the corresponding shroud (20, 30) to a second plane (R2, R3) passing through one end (12, 13) of the corresponding vane (11), the first (Q2, Q3) and second (R2, R3) planes being parallel and at a distance from each other.

9. An aircraft turbine engine (2), comprising at least one stator ring (10) according to one of the preceding claims.
